# FASCICULE DE BREVET EUROPEEN

(11) **EP 1 994 780 B1**
(45) Date de publication et mention de la délivrance du brevet: **26.08.2009**
(21) Numéro de dépôt: 07704326.3
(22) Date de dépôt: 02.02.2007
(51) Int. Cl.: H04W 12/06, H04L 29/06

(54) **ACCES A DISTANCE A UNE MEMOIRE DE MASSE ET UNE MEMOIRE DE SECURITE DANS UN OBJET COMMUNICANT PORTABLE**
SYSTEM FÜR DEN FERNZUGRIFF AUF EINE MASSENSPEICHEREINHEIT UND EINER SICHERHEITSSPEICHEREINHEIT IN EINEM TRAGBAREN KOMMUNIKATIONSOBJEKT
SYSTEM FOR REMOTELY ACCESSING A MASS STORAGE UNIT AND A SECURITY STORAGE UNIT IN A PORTABLE COMMUNICATING OBJECT

(30) Priorité: 03.02.2006 FR 0650401
(43) Date de publication de la demande: 26.11.2008
(73) Titulaire: Gemalto SA, 92190 Meudon (FR)
(72) Inventeur: MARTINET, Frédéric, F-13011 Marseille (FR); BORD, Anthony, Fuveau 13710 (FR); MOSSE, Franck, 13130 Berre l'Etang (FR)
(86) Numéro de dépôt international: PCT/EP2007/051039
(87) Numéro de publication internationale: WO 2007/088203

(56) Documents cités:
- WO-A2-98/38820
- GB-A- 2 384 403

## Description

La présente invention concerne l'accès à distance par un unique serveur à une mémoire de masse et à une mémoire de sécurité, qui sont incluses dans un objet communicant portable à capacité de mémoire élevée associé à un terminal.

Un tel terminal est décrit dans le document WO 98/38820.

L'objet communicant portable a la particularité de comprendre une unité de mémoire de masse comportant un contrôleur de mémoire et la mémoire de masse, correspondant par exemple à une mémoire d'une carte de type "Flash-Memory Card", "Secure Digital Card", "Multi-Media Card", et une unité de sécurité telle qu'une application SIM (Subscriber Identity Module) ou USIM (Universal Subscriber Identity Module) d'une carte UICC (Universal Integrated Circuit(s) Card) comportant un contrôleur de sécurité et une mémoire de sécurité associée.

Cette nouvelle technologie accroît considérablement la taille de la mémoire dans l'objet communicant portable. Celle-ci passe de 128 kilooctets à 128 mégaoctets et pourrait atteindre plusieurs gigaoctets. La taille accrue de la mémoire de masse permet d'y mémoriser toutes les données multimédias propres à un utilisateur de l'objet communicant, telles qu'un répertoire téléphonique multimédia avec des photos et des adresses de courriels, des musiques téléchargées à distance, des photos, des présentations pour des professionnels, des musiques.

Une telle architecture associant de manière distincte deux contrôleurs à deux mémoires implique un accès exclusif à l'une des deux mémoires de l'objet communicant portable par un serveur distant. Ces accès sont respectivement mis en oeuvre par deux canaux de communication entre le serveur et l'objet communicant portable. Un premier canal de communication non sécurisé est géré par le terminal et comprend deux protocoles de transmission. Un premier protocole de type OTA ("Over The Air" en anglais) est relatif à une transmission de données entre le serveur et le terminal. Un deuxième protocole de type MMC ("Multi-Media Card" en anglais) est relatif à une transmission à accès rapide des données entre le terminal et l'unité de mémoire de masse de l'objet communicant. Un deuxième canal de communication comprend un unique protocole de transmission de données sécurisée fiable et reconnue entre un serveur distant et l'unité de sécurité de l'objet communicant portable via le terminal, mais à accès moins rapide que le premier protocole. Pour le deuxième protocole, le terminal est alors considéré comme un routeur transparent.

Un inconvénient majeur de cette technologie est qu'un serveur distant ne peut accéder, à la fois, à la mémoire de masse et à la mémoire de sécurité de l'objet communicant portable. Pour ce faire, le serveur doit établir deux canaux de communication tels que précédemment présentés.

L'invention a pour objectif de remédier au problème précité en facilitant l'accès d'une entité distante, telle qu'un serveur, aussi bien à une mémoire de masse qu'à une mémoire de sécurité d'un objet communicant portable associé à un terminal.

Pour atteindre cet objectif, un procédé pour accéder à distance à une mémoire de masse et une mémoire de sécurité dans un objet communicant portable par un serveur via un réseau de communications, l'objet communiant portable étant associé à un terminal, est **caractérisé en ce qu**'il comprend les étapes suivantes :
fourniture d'un agent dans le terminal pour aiguiller des transferts de données entre le serveur distant et l'une ou l'autre des mémoires de l'objet communicant portable,
établissement d'un canal de communication entre le serveur distant et l'agent dans le terminal,
transmission de données depuis l'un des deux éléments comportant le serveur et l'une des mémoires de l'objet communicant portable à l'agent dans le terminal, et
traitement des données transmises à l'agent afin que celui-ci transfère les données transmises dans l'autre des deux éléments.

Par exemple l'objet communicant portable est une carte à puce multimédia incluant une unité de sécurité comportant la mémoire de sécurité. L'accès à distance de la mémoire de masse par le serveur est alors sécurisé par des interactions entre l'unité de sécurité et le serveur à travers l'agent dans le terminal, préalablement à la transmission de données telles que des données multimédias.

De préférence, après l'établissement du canal de communication entre le serveur distant et le terminal est prévue une authentification entre le serveur et l'unité de sécurité de l'objet communicant portable par échange de données secrètes afin d'autoriser l'accès à la mémoire de masse de l'objet communicant portable par le serveur via l'agent dès que l'authentification est confirmée.

Selon une première réalisation, après l'établissement du canal de communication entre le serveur et le terminal, le procédé de l'invention comprend en outre une transmission d'une requête par l'agent à l'unité de sécurité pour obtenir en réponse une clé de chiffrement/déchiffrement, un chiffrement des données par l'un des deux moyens comprenant le serveur et l'agent, une transmission des données chiffrées à l'autre desdits deux moyens, et un déchiffrement des données chiffrées par ledit autre desdits deux moyens.

Selon une deuxième réalisation, après l'établissement du canal de communication entre le serveur et le terminal, le procédé de l'invention comprend en outre une transmission d'une requête par un contrôleur de la mémoire de masse inclus dans l'objet communicant portable à l'unité de sécurité pour obtenir en réponse une clé de chiffrement/déchiffrement, un chiffrement des données par l'un des deux moyens comprenant le serveur et le contrôleur de mémoire de masse, une transmission des données chiffrées à l'autre desdits deux moyens, et un déchiffrement des données chiffrées par ledit autre desdits deux moyens.

L'invention a aussi pour objet un terminal associé à un objet communicant portable pour qu'un serveur accède à distance à une des mémoire de masse et mémoire de sécurité dans l'objet communicant portable via un réseau de communications. Le terminal est **caractérisé en ce qu**'il comprend un agent pour aiguiller des transferts de données entre le serveur distant et l'une ou l'autre des mémoires de l'objet communicant portable, établir un canal de communication entre le serveur distant et le terminal, et traiter des données transmises depuis l'un des deux éléments comportant le serveur et l'une des mémoires de l'objet communicant portable à l'agent afin que celui-ci transfère les données transmises dans l'autre des deux éléments.

Enfin, l'invention se rapporte à un programme apte à être mis en oeuvre dans le terminal selon l'invention.

D'autres caractéristiques et avantages de la présente invention apparaîtront plus clairement à la lecture de la description suivante de plusieurs réalisations préférées de l'invention, données à titre d'exemples non limitatifs, en référence aux dessins annexés correspondants dans lesquels :
- la figure 1 est un bloc-diagramme schématique d'un système de communication selon une réalisation d'implémentation préférée de l'invention, reliant un objet communicant portable, un terminal et un serveur ;
- la figure 2 est un bloc-diagramme schématique plus détaillé relatif à la figure 1 ;
- la figure 3 est un algorithme d'un procédé pour accéder à distance à une unité de mémoire de masse et à une unité de sécurité d'un objet communicant portable, selon l'invention ;
- la figure 4 est un algorithme d'autorisation d'accès à une mémoire de masse d'un objet communicant portable à capacité de mémoire élevée, selon l'invention ; et
- les figures 5 et 6 sont des algorithmes de transmission sécurisée de données entre un serveur et une unité de mémoire de masse d'un objet communicant portable, respectivement selon deux variantes de réalisation.

Une réalisation d'implémentation préférée de l'invention décrite ci-après est relatif au domaine des réseaux de radiocommunications dans lesquels des données peuvent être transmises entre un serveur de contenu multimédia ou un serveur d'administration d'objet communicant portable, et un terminal associé à un objet communicant portable.

Toutefois l'invention est applicable à d'autres domaines relatifs à des données financières ou bancaires, des données médicales, etc.

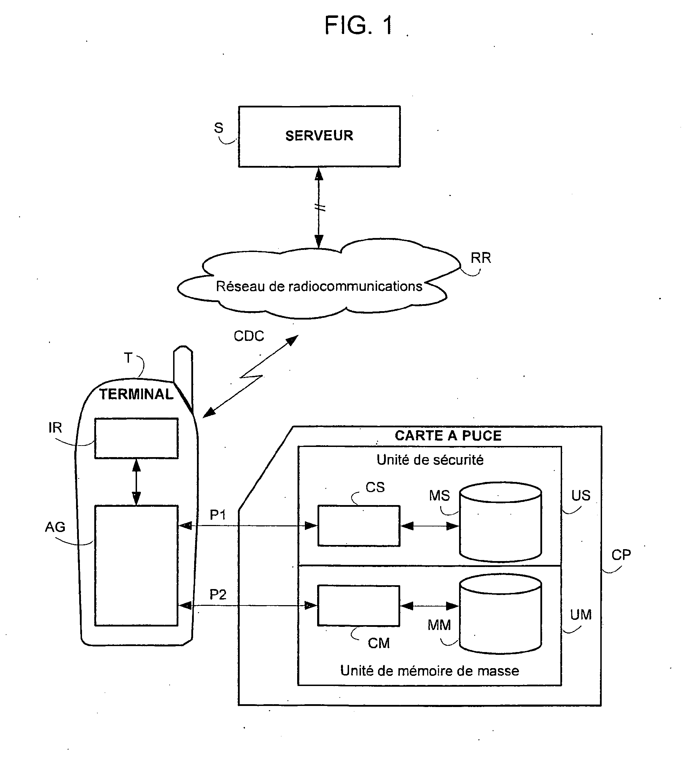

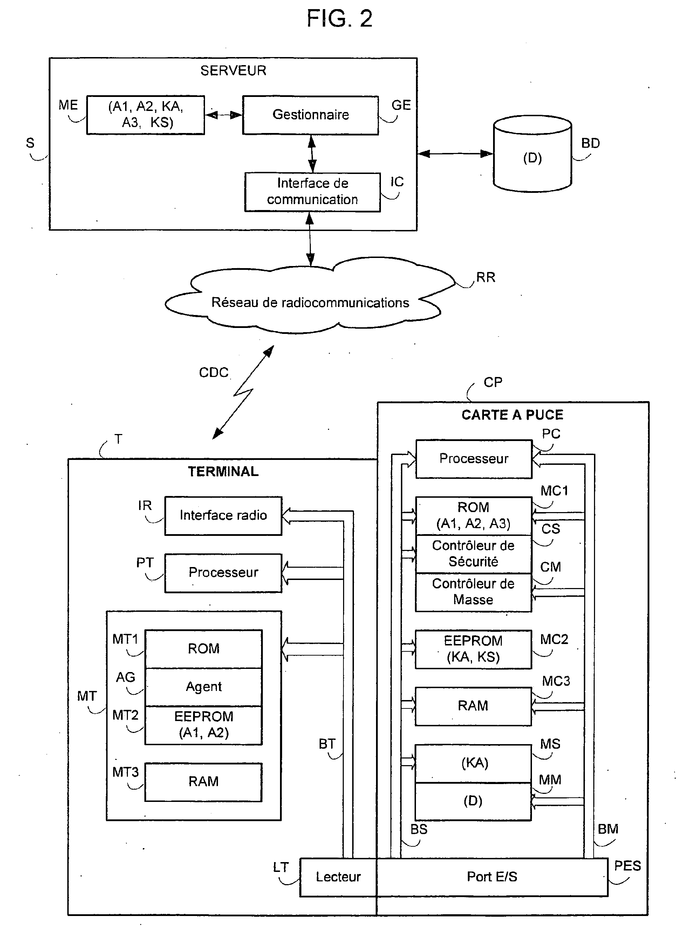

En référence aux **figures 1** **et** **2****,** un système de communication selon l'invention comprend un serveur distant S communiquant à travers au moins un réseau de radiocommunications RR avec un terminal mobile T associé à un objet communicant portable à capacité de mémoire élevée, comme par exemple une carte à puce CP à laquelle on se référera dans la suite de la description. Le réseau de radiocommunications RR est du type UMTS, du type GSM adossé à un réseau GPRS ou du type WIFI, WIMAX, WIBRO.

Les trois entités S, T et CP sont représentées sous forme de blocs fonctionnels dont la plupart assurent des fonctions ayant un lien avec l'invention et peuvent correspondre à des modules logiciels et/ou matériels.

Le **serveur S** est un serveur de contenu multimédia et/ou d'administration de carte à puce géré par un opérateur du réseau de radiocommunications RR, et constitue une plateforme OTA ("Over The Air" en anglais).

En référence à la figure 2, le serveur S comprend un gestionnaire GE, une mémoire ME et une interface de communication IC. Le serveur S est relié à ou comprend une base de données BD.

Le gestionnaire GE gère diverses opérations au cours d'une transmission de données entre le serveur S et la carte à puce CP ou le terminal T, telles qu'une authentification entre le serveur et la carte à puce CP, une détermination d'une clé de session nécessaire à des opérations de chiffrement et de déchiffrement de données échangées entre le serveur et la carte à puce ou le terminal. Le gestionnaire GE permet également à l'opérateur du réseau de radiocommunications RR de conserver le contrôle de la carte à puce CP associée au terminal T et de modifier le contenu de la carte à puce. Ces opérations à l'initiative de l'opérateur concernent par exemple un téléchargement de fichier notamment multimédia dans des cartes à puce, telles que la carte CP, du parc géré par l'opérateur, et le téléchargement ou l'effacement ou la modification de données d'un fichier ou d'une application déterminée dans au moins la carte CP.

La mémoire ME comprend un algorithme de chiffrement A1, un algorithme de déchiffrement A2, une clé d'authentification KA et un algorithme de détermination de clé de session A3. L'algorithme A3 détermine une clé de session KS qui est ensuite mémorisée dans la mémoire ME.

L'interface de communication IC transmet et reçoit des données au moins à travers le réseau de radiocommunications RR.

La base de données BD comporte, entre autres, des données D, qui peuvent être des données multimédias, et divers paramètres et caractéristiques de la carte à puce CP.

**La carte à puce CP** est une carte à puce récente avec ou sans contact à capacité de mémoire élevée. Comme représentée à la figure 1, elle comporte deux unités logiques caractéristiques. Une première unité dite unité de sécurité US comporte un premier contrôleur, appelé contrôleur de sécurité CS, et une première mémoire, appelée mémoire de sécurité MS. Une deuxième unité dite unité de mémoire de masse UM comporte un deuxième contrôleur, appelé contrôleur de mémoire de masse CM et une deuxième mémoire, appelée mémoire de masse MM, pour mémoriser des données, telles que des données multimédias, nécessitant un important espace de mémoire. Le contrôleur de sécurité et le contrôleur de mémoire de masse sont de préférence des modules logiques dans un composant physique commun. Selon un autre exemple, les contrôleurs sont intégrés dans des composants physiques distincts reliés entre eux. Les accès aux mémoires MM et MS sont distincts et respectivement contrôlés par les contrôleurs CS et CM. Par exemple, l'unité de sécurité US ou plus précisément le contrôleur de sécurité CS ne peut pas écrire de données dans la mémoire de masse MM de l'unité UM. De même, le contrôleur de mémoire de masse CM ne peut pas écrire de données dans la mémoire de sécurité MS de l'unité US.

L'unité de mémoire de masse UM est entièrement contrôlée par le terminal T qui commande au contrôleur de mémoire de masse CM l'écriture, la lecture ou la suppression de données multimédias dans la mémoire de masse MM, ce qui empêche le contrôleur de sécurité CS d'écrire dans la mémoire de masse MM. L'unité de mémoire de masse UM présente des fonctionnalités et une structure qui peuvent être analogues à celles d'une clé USB (Universal Serial Bus), ou d'une carte à mémoire flash (Flash-Memory Card), ou d'une carte numérique sécurisée (Secure Digital Card), ou d'une carte multimédia de type MMC (Multi Media Card).

Le contrôleur de sécurité CS de l'unité de sécurité US est, selon la réalisation préférée de l'invention, une application SIM (Subscriber Identity Module) lorsque le terminal associé T est un mobile du type GSM où GPRS, ou une application USIM (Universal Subscriber Identity Module), RUIM (Removable User Identity Module) ou ISIM (IP Subscriber Identity Module), associées à un terminal mobile fonctionnant en accès multiple à répartition par codes CDMA (Coded Division Multiple Access) de la troisième génération (3GPP) du type UMTS (Universal Mobile Telecommunications System) ou UTRAN (UMTS Terrestrial Radio Access Network), ou de la troisième génération (3GPP2) du type CDMA 2000. L'unité de sécurité US peut établir, de manière connue, un canal de communication de type OTA avec le serveur distant S afin de transmettre des données de manière transparente à travers le terminal T.

L'unité de sécurité US constitue un "verrou de sécurité" de l'unité de mémoire de masse UM et autorise ou interdit l'accès à l'unité de mémoire de masse UM en fonction d'une authentification entre le serveur S et l'unité de sécurité US à l'aide d'une clé d'authentification partagée KA. L'unité de sécurité détermine une clé de session KS nécessaire au chiffrement et déchiffrement de données D transmises chiffrées et ainsi de manière sécurisée entre le serveur S et le terminal T ou la carte à puce CP.

En référence à la figure 2, un microcontrôleur de la carte à puce CP comprend un processeur PC, ou plusieurs processeurs, et trois mémoires MC1 à MC3. La carte reçoit des commandes ou requêtes du terminal T, et transmet des réponses au terminal T, à travers un port d'entrée/sortie PES.

La mémoire MC1 est du type ROM ou Flash et inclut le système d'exploitation de la carte, l'algorithme de chiffrement A1, l'algorithme de déchiffrement A2 et l'algorithme A3 déterminant la clé de session KS. La mémoire MC1 comprend également le contrôleur de sécurité CS de l'unité de sécurité US et le contrôleur de mémoire de masse CM de l'unité de mémoire de masse UM.

La mémoire MC2 est une mémoire non volatile par exemple EEPROM ou Flash pour notamment mémoriser la clé d'authentification KA, la clé de session KS une fois déterminée, des numéros d'identité et d'autres paramètres du profil de l'utilisateur possédant la carte, comme un code PIN et autres données de sécurité. La mémoire MC2 est uniquement accessible par l'unité de sécurité.

En variante, la mémoire de sécurité MS comprend le contenu de la mémoire MC2.

La mémoire MC3 est une mémoire RAM ou SRAM servant plus particulièrement au traitement de données.

La mémoire de masse MM mémorise des données multimédias échangées avec le serveur S.

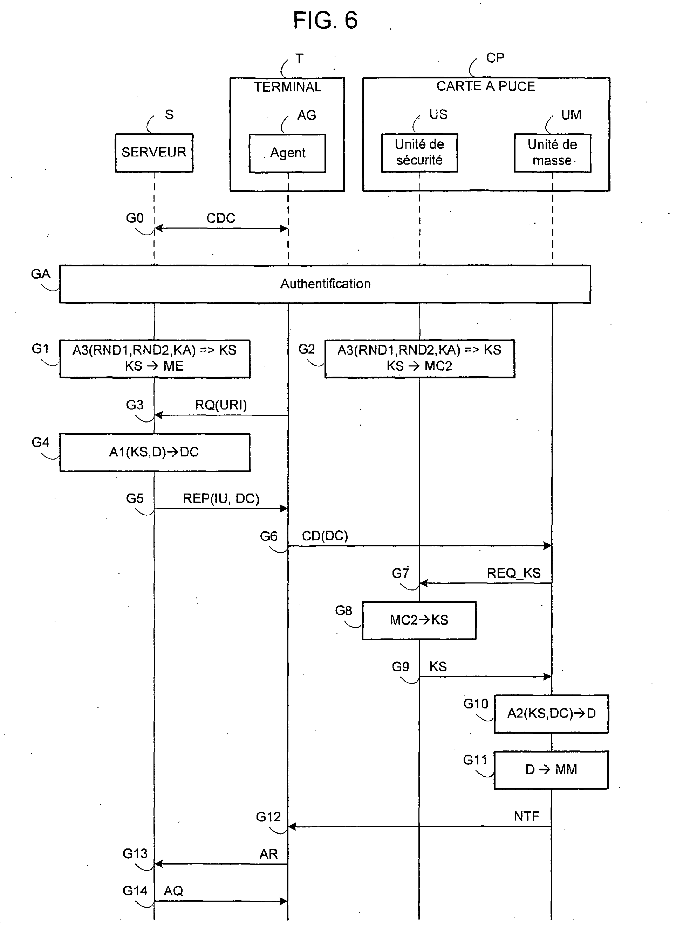

Selon une variante relative à la description ultérieure de la figure 6, le contrôleur de mémoire de masse CM comprend l'algorithme de chiffrement A1 et l'algorithme de déchiffrement A2.

Le processeur P, la mémoire ROM, le contrôleur de sécurité CS, les mémoires MC2 et MC3, la mémoire de sécurité MS et le port PES dans la carte sont reliés entre eux par un bus de sécurité bidirectionnel BS. De même, le processeur P, la mémoire ROM, le contrôleur de mémoire de masse CM, la mémoire MC3, la mémoire de masse MM et le port PES dans la carte sont reliés entre eux par un bus bidirectionnel BM. Selon l'exemple d'implémentation de la carte illustré à la figure 2, les deux contrôleurs CS et CM sont intégrés dans un même composant physique.

Le **terminal** T comprend un processeur PT, des mémoires MT, une interface radio IR et un lecteur de carte LT pour communiquer avec le port PES de la carte à puce CP. Les différents éléments du terminal sont reliés entre eux par un bus bidirectionnel BT.

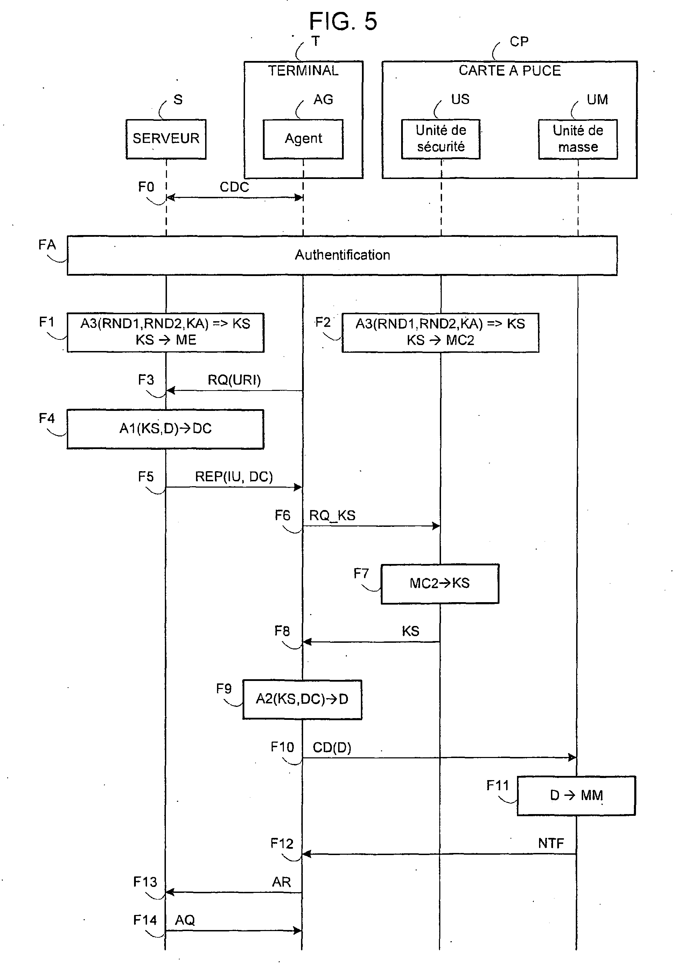

Les mémoires MT comprennent trois mémoires MT1, MT2 et MT3. La mémoire MT1 est du type ROM ou Flash et inclut le système d'exploitation du terminal T. La mémoire MT2 est une mémoire non volatile par exemple EEPROM ou Flash et peut comprendre entre autres, selon une variante relative à la description ultérieure de la figure 5, l'algorithme de chiffrement A1 et l'algorithme de déchiffrement A2. La mémoire MT3 est une mémoire RAM ou SRAM servant plus particulièrement au traitement de données.

Le terminal T comprend, en outre relativement à l'invention, un agent AG, qui peut être un agent logiciel, réparti dans les mémoires MT1 et MT2. L'agent AG est un outil informatique intermédiaire entre le serveur S et les unités US et UM de la carte à puce CP. L'agent AG a pour rôle d'aiguiller des données transmises soit entre le serveur et le contrôleur CS de l'unité de sécurité US de la carte, soit entre le serveur et le contrôleur CM de l'unité de mémoire de masse UM de la carte particulièrement pour des données multimédias. L'agent logiciel AG établit un unique canal de communication CDC de type OTA avec le serveur distant S qui ne dialogue avantageusement qu'avec l'agent AG pour accéder à l'une des deux unités US et UM de la carte. Le serveur ne gère ainsi qu'un seul protocole de communication avec le terminal.

L'agent AG prend également à sa charge les problématiques d'authentification entre le serveur et le terminal associé à la carte à puce.

Selon d'autres exemples, le terminal T est remplacé par tout terminal avec lequel peut communiquer une carte à puce, et peut être un dispositif portable de transmission de message, ou un ordinateur personnel (PC) doté d'un lecteur de carte à puce, ou un terminal fixe comme un terminal bancaire accueillant une carte à puce de débit ou de crédit. Le réseau RR peut être alors couplé par exemple à un intranet, un réseau local sans fil, ou l'internet.

L'agent AG peut également être intégré dans un ordinateur personnel relié à un terminal mobile associé à la carte à puce.

Les données sont transmises entre l'agent AG et l'unité de sécurité US selon un protocole P1 du type HTTP (HyperText Transfer Protocol) ou tout autre type de protocole basé sur TCP/IP (Transmission Control Protocol/Internet Protocol) ou, en variante, selon le protocole défini par la spécification ISO-7816 basé sur les commandes APDU (Application Protocol Data Unit). Les données sont transmises entre l'agent AG et l'unité de mémoire de masse UM selon le protocole P2 du type protocole MMC ("Multi-Média Card" en anglais).

Le protocole de communication entre l'agent AG et le serveur S est basé sur des requêtes et réponses. Par exemple, l'agent AG transmet une requête au serveur afin de récupérer des données mémorisées dans la base de données BD du serveur. La requête est relative à une demande antérieure de l'unité de sécurité ou de l'utilisateur du terminal et contient une adresse URI de mémorisation (Unified Ressource Identifier) où sont mémorisées les données requises dans la base de données BD, et des informations indiquant des attributs des données. En réponse à la requête, le serveur transmet les données accompagnées d'informations indiquant les attributs des données et un identificateur IU relatif à une des deux unités US et UM où les données doivent être mémorisées dans la carte. L'agent AG analyse les informations reçues et traite spécifiquement les données selon l'unité destinataire. Si les données sont destinées à l'unité de sécurité l'agent transmet au contrôleur de sécurité les données via le protocole P1 qui les traitera à son tour. Si les données sont destinées à l'unité de mémoire de masse, l'agent commande, via le protocole P2, leur écriture, leur lecture ou leur effacement dans la mémoire de masse MM de l'unité UM.

Deux modes de communication sont considérés entre l'agent et le serveur.

Selon un premier mode de communication, une requête contenant l'adresse URI relative aux données est émise au préalable par l'agent AG et en réponse à la requête, les données requises sont transmises par le serveur S à l'agent AG, qui les aiguille vers l'une des deux unités US et UM de la carte.

Dans un deuxième mode, des données sont téléchargées depuis le serveur dans l'agent AG qui aiguille les données téléchargées vers l'une des deux unités US et UM de la carte. L'agent AG initie le téléchargement par l'émission d'une requête au serveur indiquant si des données sont à télécharger. En réponse le serveur S transmet les adresses URI où sont mémorisées les données à télécharger. Pour chaque adresse URI transmise, l'agent AG transmet une requête contenant l'adresse URI au serveur. En réponse, le serveur transmet les données requises lues dans la base de données BD et désignées par l'adresse transmise URI.

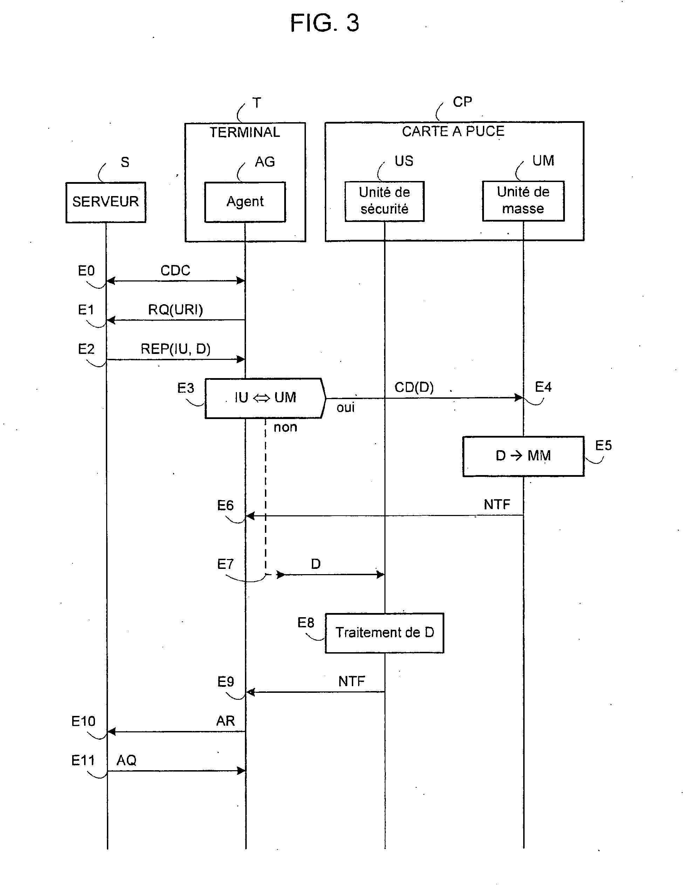

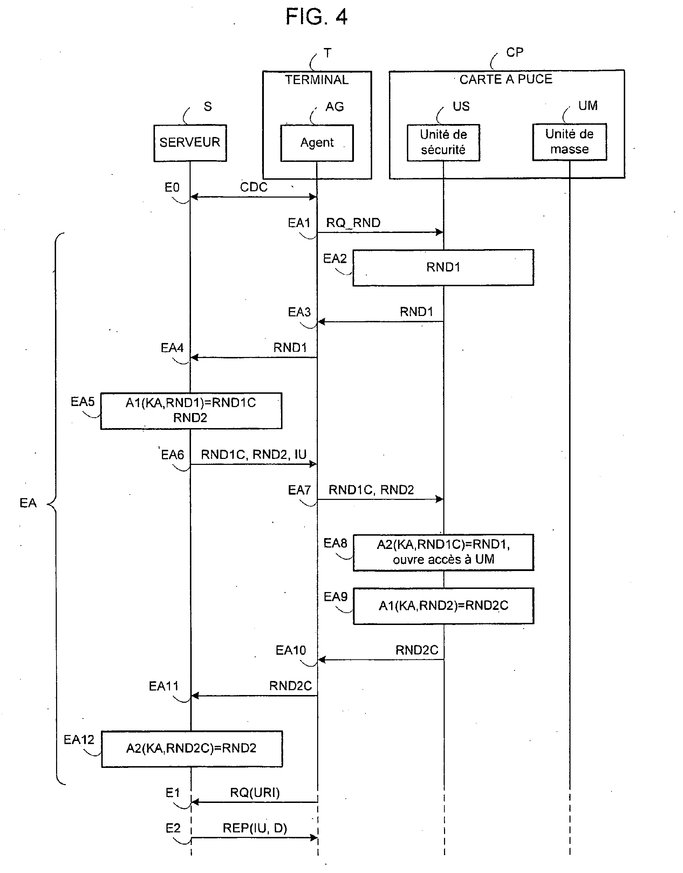

Un exemple d'implémentation du procédé selon l'invention en référence aux figures 3 et 4 concerne plus particulièrement une mise à jour de données D fournit selon le premier mode de communication par le serveur S à l'une des unités UM et US de la carte à puce.

En référence à la **figure 3**, une réalisation du procédé selon l'invention comprend des étapes E0 à E11 pour gérer des transferts de données depuis le serveur distant S destinées à l'une des unités UM et US.

A l'étape initiale E0, l'agent AG du terminal T commande l'établissement d'un canal de communication CDC avec le serveur S à travers le réseau de radiocommunications RR, par exemple en réponse à un message court SMS en mode push émis par le serveur S pour déclencher une mise à jour de données D dans une des mémoires MM et MS de la carte à puce. Toutes les transmissions entre l'agent AG et le serveur S sont exécutées par l'intermédiaire respectivement de l'interface radio IR du terminal et l'interface de communication IC du serveur S.

A l'étape E1, l'agent AG transmet une requête RQ au serveur contenant une adresse URI identifiant les données à récupérer mémorisées dans la base de données BD du serveur.

A l'étape E2, le gestionnaire GE du serveur S transmet à l'agent AG une réponse contenant les données D et un identificateur IU indiquant l'unité US ou UM de la carte destinataire des données D. L'agent AG compare l'identificateur IU aux identificateurs des unités US ou UM, à l'étape E3.

Si l'identificateur IU correspond à celui de l'unité de mémoire de masse UM, l'agent AG traite les données D, à l'étape E4, afin de les transmettre convenablement avec une commande CD d'écriture des données D dans la mémoire de masse MM au contrôleur de mémoire de masse CM de l'unité UM. Le contrôleur CM écrit à l'étape E5 les données D dans la mémoire de masse MM et transmet ensuite une notification NTF à l'agent AG dù terminal acquittant l'état correct ou incorrect de l'opération d'écriture effectuée.

Si l'écriture dans la mémoire de masse MM est incorrecte, l'agent AG restaure les données afin d'assurer une cohérence entre des données mémorisées dans la base de données DB et la mémoire de masse, lorsque le serveur S est un serveur d'administration de carte.

Si à l'étape E3, l'identificateur IU correspond à celui de l'unité de sécurité US, l'agent transmet les données D à l'unité de sécurité US via le protocole P1, à l'étape E7. Le contrôleur de sécurité CS traite les données D à l'étape E8, par exemple en les écrivant dans la mémoire de sécurité MS. Le contrôleur de sécurité transmet ensuite, à l'étape E9, une notification NTF à l'agent AG du terminal acquittant l'état correct ou incorrect de la transmission effectuée.

A l'étape E10, l'agent AG transmet un accusé de réception AR au serveur S qui lui répond par un acquittement AQ à l'étape E11.

Selon une variante de réalisation du procédé de l'invention, illustrée **à la** **figure 4****,** le procédé comprend une étape d'authentification EA insérée entre les étapes E0 et E1 précédemment décrites. L'étape d'authentification concerne une authentification entre le serveur S et l'unité de sécurité US de la carte à puce, et comprend les étapes EA1 à EA12. Initialement, l'accès à l'unité de mémoire de masse UM est verrouillé par l'unité de sécurité US qui autorise ou interdit l'ouverture de cet accès en fonction du résultat de l'authentification. Ce verrouillage ou déverrouillage de l'accès à l'unité de mémoire de masse par l'unité de sécurité est possible puisque les deux contrôleurs CS et CM de ces deux unités font partie d'un même composant physique selon la figure 2, ou de deux composants physiques distincts reliés entre eux.

A l'étape EA1, l'agent AG du terminal T transmet à l'unité de sécurité US de la carte à puce une requête RQ_RND pour obtenir un aléa RND. L'unité de sécurité US génère à l'étape EA2 un aléa RND1 et le transmet à l'agent AG à l'étape EA3. Ce dernier émet l'aléa RND1 au gestionnaire GE du serveur S à l'étape EA4. Le gestionnaire GE chiffre l'aléa RND1 en lui appliquant un algorithme de chiffrement A1 dépendant de la clé d'authentification KA et produit un premier aléa chiffré RDN1C.

Inversement, à l'étape EA5, le gestionnaire GE génère un deuxième aléa RND2 A l'étape EA6, le premier aléa chiffré RND1C et le deuxième aléa RND2 sont envoyés, de manière optionnelle, avec un identificateur IU indiquant l'unité de sécurité, à l'agent AG du terminal qui, vérifie l'identificateur IU et aiguille les aléas vers l'unité de sécurité US, à l'étape EA7. A l'étape EA8, l'unité de sécurité US déchiffre l'aléa reçu RND1C en lui appliquant un algorithme de déchiffrement A2 inverse de l'algorithme de chiffrement A1 et dépendant de la clé d'authentification KA mémorisée dans l'unité de sécurité. L'unité de sécurité compare l'aléa déchiffré à l'aléa RND1 généré à l'étape EA2. Si les deux aléas sont identiques, l'authentification du serveur par l'unité de sécurité est confirmée, et le contrôleur de sécurité de l'unité de sécurité autorise l'accès du serveur à l'unité de mémoire de masse UM via l'agent logiciel AG. Si les deux aléas ne sont pas identiques, l'accès à l'unité de mémoire de masse reste verrouillé et l'unité de sécurité génère un nouvel aléa à transmettre au serveur afin de recommencer les étapes EA2 à EA8.

Pour une authentification simple du serveur par l'unité de sécurité, l'étape d'authentification s'arrête à l'étape EA8 et le procédé se poursuit à l'étape E1 pour que le terminal reçoive les données D.

Pour une authentification mutuelle entre l'unité de sécurité et le serveur, l'étape EA8 se poursuit par l'étape EA9 au cours de laquelle l'unité de sécurité US chiffre le deuxième aléa RND2 qui avait été généré par le gestionnaire GE du serveur S à l'étape EA5. L'unité de sécurité applique à l'aléa RND2 l'algorithme de chiffrement A1 identique à celui dans le gestionnaire GE et fonction de la clé d'authentification KA. Puis à l'étape EA10, l'unité de sécurité transmet à l'agent AG le deuxième aléa chiffré RND2C, qu'il envoie au gestionnaire GE à l'étape EA11.

A l'étape EA12, le gestionnaire GE déchiffre l'aléa RND2C en lui appliquant l'algorithme de déchiffrement A2 identique à celui dans l'unité de sécurité et fonction de la clé d'authentification KA. Le gestionnaire GE compare l'aléa déchiffré à l'aléa généré RND2 à l'étape EA5. Si les deux aléas sont identiques, l'authentification mutuelle est confirmée et le procédé se poursuit à l'étape E1 pour que le terminal reçoive les données D. Sinon le gestionnaire génère un nouvel aléa à transmettre à l'unité de sécurité afin de recommencer les étapes EA5 à EA12.

Deux variantes concernant une transmission sécurisée des données multimédias D entre le serveur S et l'unité de mémoire de masse UM sont montrées respectivement aux figures 5 et 6.

En référence à la **figure 5****,** le procédé de l'invention comprend des étapes F0 à F14. L'étape F0 est une étape initiale analogue à l'étape initiale E0 décrite en référence à la figure 3 et une étape FA succédant à l'étape F0 est analogue à l'étape d'authentification EA décrite en référence à la figure 4.

Aux étapes F1 et F2 exécutées respectivement par le gestionnaire GE du serveur S et le contrôleur de sécurité CS de l'unité de sécurité US, une clé de session KS est déterminée en appliquant les aléas RND1 et RND2 échangées et la clé d'authentification KA à l'algorithme A3. La clé KS est mémorisée dans la mémoire ME du serveur, et dans la mémoire MC2 ou MS de la carte à puce CP.

A l'étape F3, l'agent AG transmet une requête RQ au serveur contenant une adresse URI identifiant les données à récupérer mémorisées dans la base de données BD du serveur.

A l'étape F4, le gestionnaire GE recherche les données multimédias D dans la base de données conformément à l'adresse URI, et les chiffre par application d'un algorithme de chiffrement A1, pouvant être identique ou non à celui utilisé aux étapes EA5 et EA9, fonction de la clé de session KS déterminée à l'étape F1 pour produire des données multimédias chiffrées DC. Ces données sont transmises à l'agent AG et incluses dans une réponse REP contenant également un identificateur IU indiquant l'unité UM, à l'étape F5.

L'agent AG reçoit les données chiffrées DC et transmet une requête RQ_KS à l'unité de sécurité US à l'étape F6 afin d'obtenir la clé de session KS nécessaire au déchiffrement des données DC. A l'étape F7, l'unité de sécurité recherche dans la mémoire MC2 ou la mémoire de sécurité MS, la clé KS déterminée à l'étape F2, et la transmet à l'agent AG, à l'étape F8.

A l'étape F9, l'agent AG déchiffre les données DC par application de l'algorithme de déchiffrement A2 pouvant être identique ou non à celui utilisé aux étapes EA8 et EA12 et fonction de la clé KS transmise afin de produire les données multimédias déchiffrées D. Selon cette variante de déchiffrement de données D, l'algorithme A2 est mémorisé dans la mémoire MT2 du terminal T.

Puis les données D sont traitées aux étapes F10 à F14 de manière analogue aux étapes E4 à E6, et E10 et E11 décrites en référence à la figure 3.

En référence à la **figure 6****,** le procédé selon l'autre variante de transmission sécurisée des données multimédias D entre le serveur S et l'unité de mémoire de masse UM comprend des étapes G0 à G14.

Les étapes G0 à G5 sont analogues aux étapes F0 à F5 décrites précédemment.

A l'étape G6, l'agent AG transmet une commande d'écriture de données CD accompagnée des données multimédias chiffrées DC à l'unité de mémoire de masse UM.

A l'étape G7, le contrôleur de mémoire de masse CM transmet une requête REQ_KS à l'unité de sécurité pour obtenir la clé de session KS. La transmission de la requête est établie de manière logicielle entre le contrôleur CM et le contrôleur CS puisque les deux contrôleurs sont des modules logiques dans un composant physique commun ou dans deux composants physiques distincts reliés entre eux.

A l'étape G8, l'unité de sécurité US recherche dans la mémoire MC2 ou la mémoire de sécurité MS, la clé KS déterminée à l'étape G2, et la transmet à l'unité de mémoire de masse UM, à l'étape G9.

A l'étape G10, le contrôleur de mémoire de masse CM déchiffre les données DC par application de l'algorithme de déchiffrement A2 pouvant être identique ou non à celui utilisé aux étapes EA8 et EA12 et fonction de la clé KS transmise afin de produire les données multimédias déchiffrées D. Selon cette variante de déchiffrement de données D, l'algorithme A2 est mémorisé dans le contrôleur de mémoire de masse CM de l'unité UM.

Puis les étapes G11 à G13 sont identiques aux étapes E4 à E6 décrites en référence à la figure 3.

A l'inverse de la réalisation décrite précédemment, une autre réalisation du procédé d'accès à distance à la mémoire de masse concerne une mise à jour de données multimédias dans la base de données BD du serveur S, les données provenant de la mémoire de masse de l'unité UM. Dans cette autre réalisation, c'est l'agent AG qui transmet au serveur des données chiffrées ou non afin de les mémoriser dans la base de données BD reliée au serveur. Par exemple, l'agent AG transmet un répertoire téléphonique qui comporte des photos et est mémorisé dans la mémoire de masse, ce qui permet à l'utilisateur de la carte à puce de retrouver tous ses contacts à la suite d'un renouvellement ou d'une perte de la carte à puce.

Dans cette autre réalisation, les données multimédias sont chiffrées, au lieu d'être déchiffrées, soit par l'agent AG du terminal, soit par le contrôleur de mémoire de masse CM selon l'une des deux variantes de transmission sécurisée des données. Dans ces deux variantes, l'entité AG, CM chiffrant des données multimédias transmet une requête RQ_KS, REQ_KS à l'unité de sécurité US afin d'obtenir la clé de session KS nécessaire au chiffrement des données.

L'invention ne se limite pas au domaine des télécommunications. L'objet communicant portable peut être une clé USB (Universal Serial Bus) pour échanger des données confidentielles mémorisées dans la mémoire de masse de la clé dont l'accès sécurisé est géré par l'unité de sécurité de la clé USB.

L'objet communicant portable peut être une carte de santé comportant une unité de mémoire de masse qui inclue des radiographies numériques ou des comptes rendus d'analyse du patient porteur de la carte, ces données multimédias étant échangées entre des professionnels de santé qui y accèdent après une authentification gérée par l'unité de sécurité de la carte de santé.

Dans le domaine de la protection du droit d'auteur, un objet communicant portable peut contenir dans sa mémoire de masse des données multimédias relatives à un film, un clip vidéo ou une oeuvre littéraire dont les droits d'accès sont gérés par l'unité de sécurité.

L'invention peut s'appliquer également au domaine bancaire, par exemple, pour la transmission périodique et sécurisée de transactions effectuées au préalable et enregistrées dans la mémoire de masse.

Selon une première utilisation de l'invention, une application multimédia est divisée en plusieurs composants. Chaque composant d'application est mémorisé en fonction de ses caractéristiques. Les composants ne nécessitant pas de sécurité particulière sont mémorisés dans le terminal. Les composants d'application qui requièrent une bonne sécurité et un espace mémoire limité sont mémorisés dans l'unité de sécurité. Les composants d'application nécessitant un espace mémoire important et une sécurité gérée par l'unité de sécurité sont mémorisés dans la mémoire de masse.

Selon un premier exemple relatif à la première utilisation, une application de répertoire téléphonique multimédia peut être divisée en deux composants d'application :
les noms et les numéros téléphoniques des contacts mémorisés dans l'unité de sécurité, et
les photos des contacts mémorisées dans la mémoire de masse.

Ainsi, si l'objet communicant portable est relié à un terminal ne comportant pas d'agent permettant d'accéder à la mémoire de masse de manière sécurisée, l'utilisateur pourra accéder classiquement aux noms et aux numéros téléphoniques des contacts inclus dans l'unité de sécurité.

Selon un deuxième exemple de la première utilisation, un autre type d'application multimédia peut comporter les composants suivants : un moteur de gestion gérant la présentation de l'application multimédia, une logique applicative qui est le coeur de l'application et qui requiert un accès contrôlé et une bonne sécurité, et les données multimédias nécessitant un accès rapide. Ainsi, le moteur de gestion est mémorisé dans le terminal, la logique applicative est mémorisée dans l'unité de sécurité et les données multimédias sont mémorisées dans la mémoire de masse de l'unité de mémoire de masse.

Un exemple d'une telle application est un jeu vidéo. L'interface homme-machine du jeu est gérée par le terminal. La logique de jeu servant par exemple au calcul de scores, au passage d'un fond d'écran à un autre selon des scores obtenus, etc., est mémorisée dans l'unité de sécurité. Les données multimédias nécessaires à la présentation des fonds d'écran, des personnages, etc., sont mémorisées dans la mémoire de masse.

Selon une deuxième utilisation de l'invention, un opérateur de réseau de radiocommunications contrôle la fin de la personnalisation multimédia de l'objet communicant portable en fonction du profil de l'utilisateur juste avant que l'objet lui soit livré. Cette utilisation permet une gestion plus précise des stocks d'objet communicant portable chez l'opérateur. Par exemple, lors de la livraison de l'objet communicant portable, le serveur S de l'opérateur transmet via le contenu multimédia correspondant au profil de l'abonné pour le mémoriser dans la mémoire de masse. Selon un autre exemple, la mémoire de masse contient les contenus multimédias des différents profils de l'utilisateur lors de la fabrication de l'objet communication portable en usine. Avant la livraison de l'objet communicant portable, un contenu est sélectionné selon le profil de l'utilisateur et les autres contenus sont supprimés.

Selon un autre exemple d'implémentation de l'invention, le serveur S peut être un ordinateur personnel (PC) relié au terminal T par une liaison filaire de type liaison série ou liaison USB, ou par une liaison sans fil de type Bluetooth, WIFI, infrarouge (IrDA : Infrared Data Association) ou ZigBee.

Selon encore un autre exemple d'implémentation de l'invention, un ordinateur personnel (PC) sert de passerelle entre le serveur et le terminal. Le serveur S communique avec l'ordinateur via un réseau de communication du type internet, et l'ordinateur communique avec le terminal via une liaison sans fil de type Bluetooth, WIFI, infrarouge (IrDA : Infrared Data Association) ou ZigBee.

L'invention décrite ici concerne un procédé et un terminal T associé à un objet communicant portable CP pour qu'un serveur S accède à distance via un unique canal de communication à une mémoire de masse MM capable de stocker des données multimédias et une mémoire de sécurité dans l'objet communicant portable CP à travers un réseau de radiocommunications RR. Selon une implémentation préférée, les étapes du procédé de l'invention sont déterminées par les instructions d'un programme d'ordinateur incorporé particulièrement dans le terminal. Le programme comporte des instructions de programme qui, lorsque ledit programme est chargé et exécuté dans le terminal, dont le fonctionnement est alors commandé par l'exécution du programme, réalisent les étapes du procédé selon l'invention :
fourniture d'un agent dans le terminal pour aiguiller des transferts de données entre le serveur distant et l'une ou l'autre des mémoires de l'objet communicant portable,
établissement E0 d'un canal de communication entre le serveur distant et l'agent dans le terminal,
transmission E1 de données depuis l'un des deux éléments comportant le serveur et l'une des mémoires de l'objet communicant portable à l'agent dans le terminal, et
traitement E2 des données transmises à l'agent afin que celui-ci transfère les données transmises dans l'autre des deux éléments.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

## Revendications

1. - Procédé pour accéder à distance à une mémoire de masse (MM) et une mémoire de sécurité (MS) dans un objet communicant portable (CP) par un serveur (S) via un réseau de communications (RR), l'objet communicant portable étant associé à un terminal (T), **caractérisé en ce qu'**il comprend les étapes suivantes :
fourniture d'un agent (AG) dans le terminal pour aiguiller des transferts de données entre le serveur distant et l'une ou l'autre des mémoires de l'objet communicant portable,
établissement (E0) d'un canal de communication (CDC) entre le serveur distant et l'agent dans le terminal,
transmission (E1) de données (D) depuis l'un des deux éléments comportant le serveur et l'une des mémoires de l'objet communicant portable à l'agent (AG) dans le terminal, et
traitement (E2) des données transmises à l'agent (AG) afin que celui-ci transfère les données transmises dans l'autre des deux éléments.

2. - Procédé conforme à la revendication 1, selon lequel l'accès à distance de la mémoire de masse (MM) par le serveur (S) est sécurisé par des interactions entre une unité de sécurité (US) comportant la mémoire de sécurité, et le serveur à travers l'agent (AG) dans le terminal (T), préalablement à la transmission (E1) de données (D).

3. - Procédé conforme à la revendication 2, comprenant après l'établissement (E0) du canal de communication (CDC) entre le serveur distant (S) et le terminal (T), une authentification (EA, FA, GA) entre le serveur et l'unité de sécurité (US) de l'objet communicant portable (CP) par échange de données secrètes (RND1, RND2) afin d'autoriser (EA8) l'accès à la mémoire de masse (MM) de l'objet communicant portable par le serveur via l'agent (AG) dès que l'authentification est confirmée.

4. - Procédé conforme à la revendication 2 ou 3, comprenant après l'établissement (F0) du canal de communication (CDC) entre le serveur (S) et le terminal (T), une transmission (F5) d'une requête (RQ_KS) par l'agent (AG) à l'unité de sécurité (US) pour obtenir (F7) en réponse une clé de chiffrement/déchiffrement (KS), un chiffrement (F3) des données (D) par l'un des deux moyens comprenant le serveur (S) et l'agent (AG), une transmission (F4) des données chiffrées à l'autre desdits deux moyens (AG, S), et un déchiffrement (F8) des données chiffrées (D) par ledit autre desdits deux moyens.

5. - Procédé conforme à la revendication 2 ou 3, comprenant après l'établissement (G0) du canal de communication (CDC) entre le serveur (S) et le terminal (T), une transmission (G6) d'une requête (REQ_KS) par un contrôleur (CM) de la mémoire de masse inclus dans l'objet communicant portable à l'unité de sécurité (US) pour obtenir (G7) en réponse une clé de chiffrement/déchiffrement (KS), un chiffrement (G3) des données (D) par l'un des deux moyens comprenant le serveur (S) et le contrôleur de mémoire de masse (CM), une transmission (G4, G5) des données chiffrées à l'autre desdits deux moyens (CM, S), et un déchiffrement (G9) des données chiffrées (D) par ledit autre desdits deux moyens.

6. - Terminal (T) associé à un objet communicant portable (CP) pour qu'un serveur (S) accède à distance à une des mémoire de masse (MM) et mémoire de sécurité (MS) dans l'objet communicant portable (CP) via un réseau de communications (RR), **caractérisé en ce qu'**il comprend un agent (AG) pour aiguiller des transferts de données entre le serveur distant et l'une ou l'autre des mémoires de l'objet communicant portable, établir un canal de communication (CDC) entre le serveur distant et le terminal, et traiter des données transmises depuis l'un des deux éléments comportant le serveur et l'une des mémoires de l'objet communicant portable à l'agent (AG) afin que celui-ci transfère les données transmises dans l'autre des deux éléments.

7. - Programme apte à être mis en oeuvre dans un terminal (T) associé à un objet communicant portable (CP) pour qu'un serveur (S) accède à distance à une des mémoire de masse (MM) et mémoire de sécurité (MS) dans l'objet communicant portable (CP) via un réseau de communications (RR), **caractérisé en ce qu'**il comprend des instructions qui, lorsque le programme est exécuté dans ledit terminal, réalisent les étapes suivantes :
fourniture d'un agent (AG) dans le terminal pour aiguiller des transferts de données entre le serveur distant et l'une ou l'autre des mémoires de l'objet communicant portable,
établissement (E0) d'un canal de communication (CDC) entre le serveur distant et l'agent dans le terminal,
transmission (E1) de données (D) depuis l'un des deux éléments comportant le serveur et l'une des mémoires de l'objet communicant portable à l'agent (AG) dans le terminal, et
traitement (E2) des données transmises à l'agent (AG) afin que celui-ci transfère les données transmises dans l'autre des deux éléments.

## Claims

1. - A method for giving a remote access to a mass storage (MM) and a security storage (MS) in a portable communicating object (CP) by a server (S) via a communication network (RR), with the portable communicating object being associated with the terminal (T), **characterised in that** it includes the following steps:
providing an agent (AG) in the terminal for switching the transfers of data between the remote server and either one of the memories of the portable communicating object,
setting up (E0) a communication channel (CDC) between the remote server and the agent in the terminal,
transmission (E1) of data (D) from one of the two elements including the server and one of the memories of the portable communicating object to the agent (AG) in the terminal, and
processing (E2) the data transmitted to the agent (AG) so that the latter transfers the data transmitted to the other one of the two elements.

2. - A method according to claim 1, wherein the remote access to the mass storage (MM) by the server (S) is secured by interactions between a security unit (US) including the security storage, and the server through the agent (AG) in the terminal (T), prior to the transmission (E1) of data (D).

3. - A method according to claim 2, including, after the setting up (E0) of the communication channel (CDC) between the remote server (S) and the terminal (T), an authentication (EA, FA, GA) between the server and the security unit (US) of the portable communicating object (CP) through the exchange of secret data (RND1, RND2) in order to authorize (EA8) the access to the mass storage (MM) of the portable communicating object by the server via the agent (AG) as soon as the authentication is confirmed.

4. - A method according to claim 2 or 3, including, after the setting up (F0) of the communication channel (CDC) between the server (S) and the terminal (T), a transmission (F5) of a request (RQ_KS) by the agent (AG) to the security unit (US) for obtaining (F7), in answer, an encryption/decryption key (KS), an encryption (F3) of the data (D) by one of the two means including the server (S) and the agent (AG), a transmission (F4) of the data encrypted to the other of said two means (AG, S) and a decryption (F8) of the encrypted data (D) by said other one of said two means.

5. - A method according to claim 2 or 3, including, after the setting up (G0) of the communication channel (CDC) between the server (S) and the terminal (T), a transmission (G6) of a request (REQ_KS) by a controller (CM) of the mass storage included in a portable communicating object to the security unit (US) for obtaining (G7), in answer, an encryption/decryption key (KS), an encryption (G3) of the data (D) by one of the two means including the server (S) and the mass storage controller (CM), a transmission (G4, G5) of the encrypted data to the other of said two means (CM, S) and a decryption (G9) of the encrypted data (D) by said other of said two means.

6. - A terminal (T) associated with a portable communicating object (CP) so that the server (S) has a remote access to one of a mass storage (MM) and a security storage (MS) in the portable communicating object (CP) via a communication network (RR), **characterised in that** it includes an agent (AG) for switching the transfers of data between the remote server and either one of the storages of the portable communicating object, setting up a communication channel (CDC) between the remote server and the terminal, and processing the data transmitted from one of the two elements including the server and one of the storages of the portable communicating object to the agent (AG) so that the latter transfers the data transmitted to the other one of the two elements.

7. - A program able to be implemented in a terminal (T) associated with a portable communicating object (CP) so that a server (S) has a remote access to a memory storage (MM) and a security storage (MS) in the portable communicating object (CP) via a communication network (RR), **characterised in that** it includes instructions which carry out the following steps, when the program is executed in said terminal:
providing an agent (AG) in the terminal for switching the transfers of data between the remote server and either one of the storages of the portable communicating object,
setting up (E0) a communication channel (CDC) between the remote server and the agent in the terminal,
transmission (E1) of data (D) from one of the two elements including the server and one of the storages of the portable communicating object to the agent (AG) in the terminal, and
processing (E2) the data transmitted to the agent (AG) so that the latter transfers the data transmitted to the other one of the two elements.

## Patentansprüche

1. Verfahren zum Fernzugriff auf einen Massenspeicher (MM) und einen Sicherheitsspeicher (MS) in einem tragbaren kommunizierenden Objekt (CP) durch einen Server (S) über ein Kommunikationsnetz (RR), wobei das tragbare kommunizierende Objekt einem Terminal (T) zugeordnet ist, **dadurch gekennzeichnet, dass** es die folgenden Stufen umfasst:
Lieferung eines Agenten (AG) im Terminal zum Leiten der Datentransfers zwischen dem entfernten Server und dem einen oder dem anderen der Speicher des tragbaren kommunizierenden Objekts,
Herstellung (E0) eines Kommunikationskanals (CDC) zwischen dem entfernten Server und dem Agenten im Terminal,
Übertragung (E1) von Daten (D) von einem der zwei Elemente, die den Server und einen der Speicher des tragbaren Objekts umfassen, auf den Agenten (AG) in dem Terminal und
Verarbeitung (E2) der auf den Agenten (AG) übertragenen Daten, damit dieser die auf das andere der zwei Elemente übertragenen Daten überträgt.

2. Verfahren gemäß Anspruch 1, nach dem der Fernzugriff des Massenspeichers (MM) durch den Server (S) durch Interaktionen zwischen einer Sicherheitseinheit (US) gesichert wird, die den Sicherheitsspeicher umfasst, und dem Server über den Agenten (AG) im Terminal (T) vor der Übertragung (E1) von Daten (D).

3. Verfahren gemäß Anspruch 2, das nach der Herstellung (E0) des Kommunikationskanals (CDC) zwischen dem entfernten Server (S) und dem Terminal (T) eine Authentifizierung (EA, FA, GA) zwischen dem Server und der Sicherheitseinheit (US) des tragbaren kommunizierenden Objekts (CP) per Austausch von geheimen Daten (RND1, RND2) umfasst, um den Zugriff auf den Massenspeicher (MM) des tragbaren kommunizierenden Objekts durch den Server über den Agenten (AG) zu gestatten (EA8), sobald die Authentifizierung bestätigt ist.

4. Verfahren gemäß Anspruch 2 oder 3, das nach der Herstellung (F0) des Kommunikationskanals (CDC) zwischen dem Server (S) und dem Terminal (T) eine Übertragung (F5) einer Anfrage (RQ_KS) durch den Agenten (AG) auf die Sicherheitseinheit (US) umfasst, um als Antwort einen Verschlüsselungs- / Entschlüsselungsschlüssel (K5), eine Verschlüsselung (F3) der Daten (D) durch eines der zwei Mittel, das den Server (S) und den Agenten (AG) umfasst, eine Übertragung (F4) der verschlüsselten Daten auf das andere der genannten zwei Mittel (AG, S) und eine Entschlüsselung (F8) der verschlüsselten Daten (D) durch das genannte andere der genannten zwei Mittel zu erhalten (F7).

5. Verfahren gemäß Anspruch 2 oder 3, das nach der Herstellung (G0) des Kommunikationskanals (CDC) zwischen dem Server (S) und dem Terminal (T) eine Übertragung (G6) einer Anfrage (REQ_KS) durch einen Kontrolleur (CM) des Massenspeichers, der im tragbaren kommunizierenden Objekt inbegriffen ist, auf die Sicherheitseinheit (US) umfasst, um als Antwort einen Verschlüsselungs- / Entschlüsselungsschlüssel (KS), eine Verschlüsselung (G3) der Daten (D) durch eines der zwei Mittel, das den Server (S) und den Kontrolleur des Massenspeichers (CM) umfasst, eine Übertragung (G4, G5) der verschlüsselten Daten auf das andere der genannten zwei Mittel (CM, S) und eine Entschlüsselung (G9) der verschlüsselten Daten (D) durch das genannte andere der genannten zwei Mittel zu erhalten (G7).

6. Einem tragbaren kommunizierenden Objekt (CP) zugeordnetes Terminal (T), damit ein Server (S) entfernt auf einen der Massenspeicher (MM) und Sicherheitsspeicher (MS) in dem tragbaren kommunizierenden Objekt (CP) über ein Kommunikationsnetz (RR) zugreift, **dadurch gekennzeichnet, dass** es einen Agenten (AG) zum Leiten der Übertragungen von Daten zwischen dem entfernten Server und dem einen oder dem anderen der Speicher des tragbaren kommunizierenden Objekts, die Herstellung eines Kommunikationskanals (CDC) zwischen dem entfernten Server und dem Terminal und die Verarbeitung der Daten, die von dem einen der zwei Elemente übertragen werden, das den Server und einen der Speicher des tragbaren kommunizierenden Objekts auf den Agenten (AG) umfasst, damit dieser die in das andere der zwei Elemente übertragenen Daten überträgt, umfasst.

7. Programm, das zur Umsetzung in einem Terminal (T) geeignet ist, das einem tragbaren kommunizierenden Objekt (CP) zugeordnet ist, damit ein Server (S) entfernt auf einen der Massenspeicher (MM) und Sicherheitsspeicher (MS) in dem tragbaren kommunizierenden Objekt (CP) über ein Kommunikationsnetz (RR) zugreift, **dadurch gekennzeichnet, dass** es Anweisungen umfasst, die, wenn das Programm in dem genannten Terminal ausgeführt wird, die folgenden Stufen realisieren:
Lieferung eines Agenten (AG) im Terminal zum Leiten der Übertragungen von Daten zwischen dem entfernten Server und dem einen oder dem anderen der Speicher des tragbaren kommunizierenden Objekts,
Herstellung (E0) eines Kommunikationskanals (CDC) zwischen dem entfernten Server und dem Agenten in dem Terminal,
Übertragung (E1) von Daten (D) von dem einen der zwei Elemente, das den Server und einen der Speicher des tragbaren kommunizierenden Objekts umfasst, auf den Agenten (AG) in dem Terminal und
Verarbeitung (E2) der auf den Agenten (AG) übertragenen Daten, damit dieser die in das andere der zwei Elemente übertragenen Daten überträgt.
